# EUROPEAN PATENT SPECIFICATION

(11) **EP 3 417 031 B1**
(45) Date of publication and mention of the grant of the patent: **15.04.2020**
(21) Application number: 17702851.1
(22) Date of filing: 31.01.2017
(51) Int. Cl.: C09K 11/02, C08G 18/38, C08G 18/00, C09K 11/56, C09K 11/62, C09K 11/88

(54) **POLYTHIOURETHANE MATRIX CONTAINING NANOCRYSTALS**
NANOKRISTALLE ENTHALTENDE POLYTHIOURETHANMATRIX
MATRICE DE POLYTHIOURÉTHANE CONTENANT DES NANOCRISTAUX

(30) Priority: 16.02.2016 EP 16155918
(43) Date of publication of application: 26.12.2018
(73) Proprietor: Suzhou Rainbow Materials Co., Ltd., Zhangjiagang Jiangsu 215634 (CN)
(72) Inventor: GÖTHEL, Frank, 09125 Chemnitz (DE); CARRERAS, Paz, 08029 Barcelona (ES); MINNAAR, Jozeph Leendert, 4328 PB Zeeland (NL); TORRES CANO, Elisabet, 08022 Barcelona (ES); SALHI, Fouad, 08193 Bellaterra (Barcelona) (ES); ESTRUGA, Marc, 08211 Castellar del Valles (Barcelona) (ES); CARRETÉ, Àlex, 08015 Barcelona (ES); RODRÍGUEZ, Denis, 36213 Vigo (Pontevedra) (ES); SMITH, Daniel, Rotherham South Yorkshire S60 2NA (GB); MARQUET CORTÉS, Jordi, 08034 Barcelona (ES); SEBASTIÁN PÉREZ, Rosa Maria, 08291 Ripollet (ES); GUIRADO, Gonzalo, 08205 Sabadell (Barcelona) (ES); DE MENDIZABAL ZALAIKIN, Julen, 08029 Barcelona (ES)
(74) Representative: Baudler, Ron
(86) International application number: PCT/EP2017/052003
(87) International publication number: WO 2017/140490

(56) References cited:
- EP-A1- 2 497 791
- DE-A1-102007 017 651
- US-A1- 2010 109 317
- US-A1- 2015 218 444
- CHANGLI LÜ ET AL: "High refractive index thin films of ZnS/polythiourethane nanocomposites", JOURNAL OF MATERIALS CHEMISTRY, ROYAL SOCIETY OF CHEMISTRY, GB, vol. 13, 4 February 2003 (2003-02-04), pages 526-530, XP002529130, ISSN: 0959-9428, DOI: 10.1039/B208850A [retrieved on 2003-02-04]

## Description

### Technical field

The present invention relates to a nanocrystal composite comprising nanocrystals in a polythiourethane matrix. Composites of the present invention provide improved thermal and photo thermal stability to the nanocrystals.

### Background of the invention

Semiconductor nanocrystals can be used as light down-converters, i.e., shorter wavelength light is converted to longer wavelength light. The nanocrystal (NC) composites are used in a broad range of applications including displays, lighting, security inks, bio-labelling and solar concentrators. In all the cases, the NC composites are exposed to a certain light flux and temperature. The exposure of the NC composites to photons and temperature under the presence of air and moisture causes decrease of the optical properties of the composite. Changli Lü et al disclose in the Journal of Materials Chemistry, vol. 13, pages 526-530: High refractive index thin films of ZnS/polythiourethane nanocomposites.

NC composites are used in light down-conversion applications. The state of the art NC composites degrade by exposure to temperature and photons over time. To improve the stability of the NCs, the composites need an additional protection against oxygen and moisture e.g. by a high performance barrier film or glass encapsulation. To avoid the presence of air and moisture in the encapsulated NC composite, the manufacturing has to be performed under inert atmosphere.

NCs are synthesized in solution and can be further embedded in polymer matrices that act as a carrier and first protective layer. Physical mixing of NC solutions with a polymer solution or a crosslinking formulation is a common approach used in the art to obtain NC-polymer composite materials.

The most common matrices for NC composites used in down-conversion are based on acrylate or epoxy resins. Rapid curing speed initiated by UV irradiation and/or elevated temperatures makes them easy to process for large scale film manufacturing. NCs embedded in acrylate- or epoxy-based matrices tend to degrade under operation conditions. Therefore, an additional barrier film is needed to prevent the permeability of oxygen and moisture inside the adhesive, which increases the cost and thickness of the final product.

To overcome the problems related to the thermal and photon degradation of the NCs, two approaches have been used and reported. In the first approach, an epoxy-amine resin containing NCs are placed between barrier layers. However, this approach provides thicker products and is more expensive to produce. Increased costs are due to barrier layers, which are sophisticated organic-inorganic multilayers, and the product needs to be manufactured in oxygen and/or moisture free environment. Despite the use of the barrier layers, oxygen and moisture still penetrate the unprotected edges of the product, and leads to a degradation in these areas. In the second approach, the NCs are embedded in an acrylic polymerizable formulation and subsequently, further encapsulate the NC composite inside a glass tube. The process requires a sophisticated manufacturing line under oxygen and/or moisture free environment. Furthermore, such fragile products require a modification of the product architecture and manufacturing process.

In a further approach, thiols have been used, as a part of the adhesive matrix for quantum dot (QD) composites. Thiols have been found to be beneficial for their thermal stability broadening the range of matrix chemistries with a good QD dispersion. However, degradation caused by photons cannot be prevented completely in combination with state of the art polymer matrices.

Therefore, there is still a need for a nanocrystal composites, which provide improved thermal and photo thermal stability to the nanocrystals.

### Summary of the invention

The present invention relates to a nanocrystal composite comprising a plurality of nanocrystals comprising a core comprising a metal or a semiconductive compound or a mixture thereof and at least one ligand, wherein said core is surrounded by at least one ligand, and a polythiourethane matrix, wherein said polythiourethane matrix is formed by thermal or UV induced nucleophilic addition of polyisocyanates having at least two isocyanate groups and polythiols having at least two thiol groups, wherein said polythiols are selected from the group consisting of: 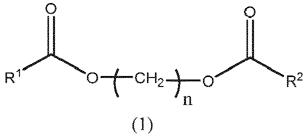 wherein n is 2 - 10, R¹ and R² are same or different and are independently selected from-CH₂-CH(SH)CH₃ and -CH₂-CH₂-SH; 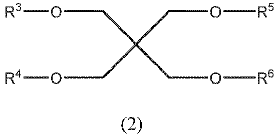 wherein R³, R⁴, R⁵ and R⁶ are same or different and are independently selected from-C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃; 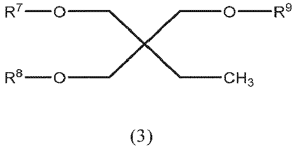 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH,-C(O)-CH(SH)-CH₃ and o is 1-10; 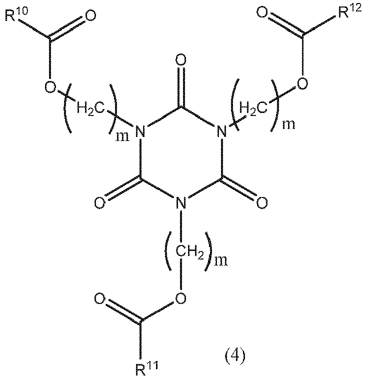 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃, and mixtures thereof, and wherein said polyisocyanates are selected from polyisocyanates based on isocyanates selected from the group consisting of 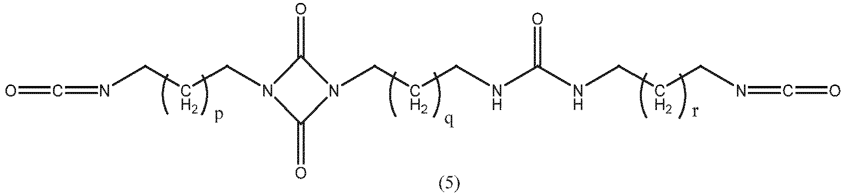 wherein p, q and r are same or different and have a value 2-10; 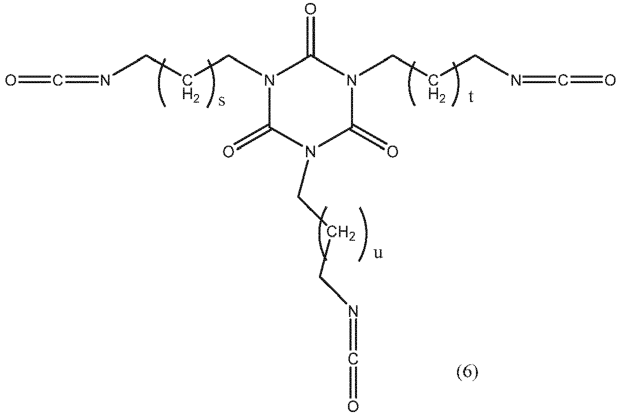 wherein s, t and u are same or different and have a value 2-10; 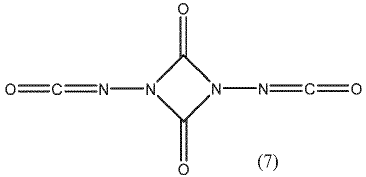 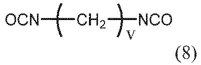 wherein v has a value 2-10; 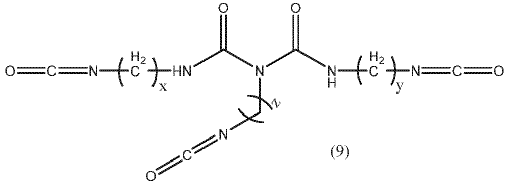 wherein x, y and z are same or different and have a value 2-10, preferably a value 4-6, and more preferably x, y and z are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof; and wherein said nanocrystals are embedded into said polymer matrix in an amount from 0.05 to 7.5% by weight of the total weight of the composite.

In addition, the present invention relates to a cured nanocrystal composite according to present invention.

The present invention encompasses a product comprising a NC composite according to the present invention, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

The present invention further encompasses the use of NC composite according to the present invention as a source of photoluminescence or electroluminescence.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous. In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in the disclosing invention, including technical and scientific terms, have the meaning as commonly understood by one of the ordinary skill in the art to which this invention belongs to. By means of further guidance, term definitions are included to better appreciate the teaching of the present invention.

The present invention addresses a class of polymer matrices, which act itself as a protection to the NCs. Therefore, materials and manufacturing costs can be reduced. Moreover, less space will be required for the implementation of the NC composite in a light down-conversion device.

The present invention provides a NC composite comprising a) a plurality of NCs comprising a core comprising a metal or a semiconductive compound or a mixture thereof and at least one ligand, wherein said core is surrounded by at least one ligand, and b) a polythiourethane matrix, wherein said polythiourethane matrix is formed by thermal or UV induced nucleophilic addition of polyisocyanates having at least two isocyanate groups and polythiols having at least two thiol groups, wherein said polythiols are selected from the group consisting of 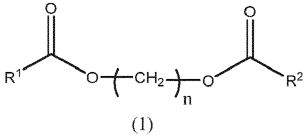 wherein n is 2 - 10, R¹ and R² are same or different and are independently selected from-CH₂-CH(SH)CH₃ and -CH₂-CH₂-SH; 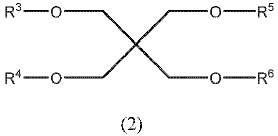 wherein R³, R⁴, R⁵ and R⁶ are same or different and are independently selected from-C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃; 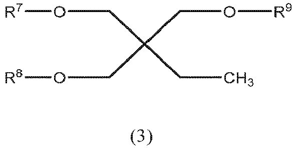 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH,-C(O)-CH(SH)-CH₃ and o is 1-10; 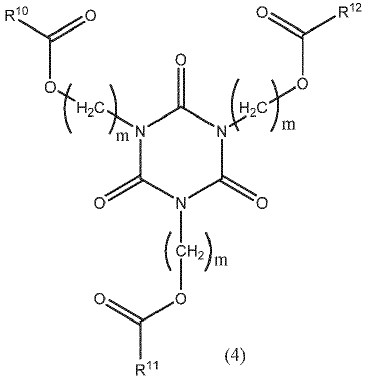 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃, and mixtures thereof and wherein said polyisocyanates are selected from polyisocyanates based on isocyanates selected from the group consisting of 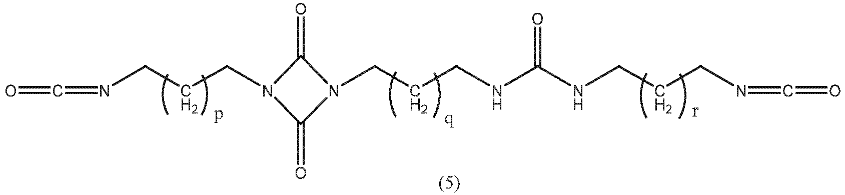 wherein p, q and r are same or different and have a value 2-10; preferably p, q and r are same and have a value 4; 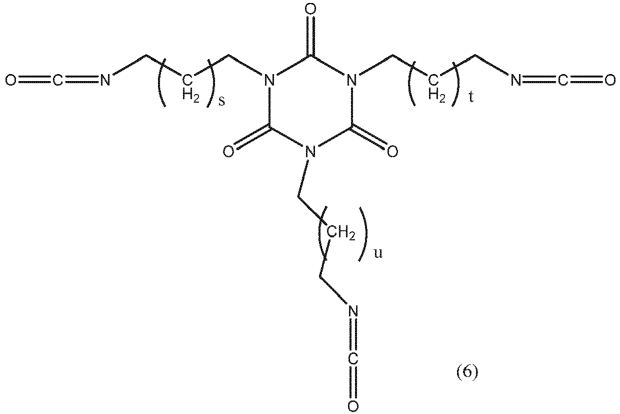 wherein s, t and u are same or different and have a value 2-10; preferably s, t and u are same and have a value 4; 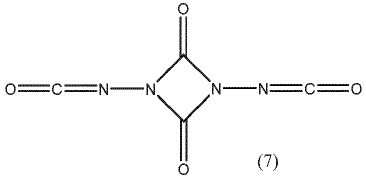 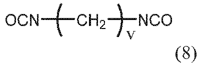 wherein v has a value 2-10; preferably v has a value 4-6, and more preferably v is 6; 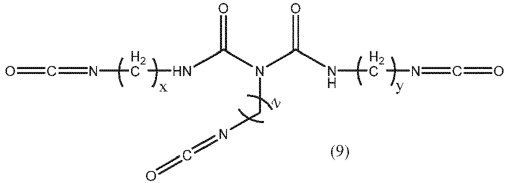 wherein x, y and z are same or different and have a value 2-10, preferably a value 4-6, and more preferably x, y and z are 6; polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof; and wherein said nanocrystals are embedded into said polymer matrix.

All features of the present invention will be discussed in details.

A NC composite according to the present invention comprises a plurality of NCs comprising a core comprising a metal or a semiconductive compound or a mixture thereof.

The core of the NCs according to the present invention has a structure including the core alone or the core and one or more shell(s) surrounding the core. Each shell may have structure comprising one or more layers, meaning that each shell may have monolayer or multilayer structure. Each layer may have a single composition or an alloy or concentration gradient.

In one embodiment, the core of the NCs according to the present invention has a structure comprising a core and at least one monolayer or multilayer shell. Yet, in another embodiment, the core of the nanocrystals according to the present invention has a structure comprising a core and at least two monolayer and/or multilayer shells.

Preferably, the size of the core of the NCs according to the present invention is less than 100 nm, more preferably less than 50, more preferably less than 10, however, preferably the core is larger than 1 nm. The particle size is measured by using transmission electron microscopy (TEM).

The shape of the nanocrystal can be chosen from a broad range of geometries. Preferably the shape of the core of the NCs according to the present invention is spherical, rectangular (platelet), rod or triangle (tetrahedral) shape.

The core of the NCs is composed of a metal or a semiconductive compound or a mixture thereof. Moreover, metal or semiconductive compound is combination of one or more elements selected from combination of one or more different groups of the periodic table.

Preferably, metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof.

More preferably said metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ and AgGaSe₂.

Preferred metal or semiconductive compounds provide better optical properties.

Preferably, NCs according to the present invention have a particle diameter (e.g. largest particle diameter, including core and shell) ranging from 1 nm to 100 nm, preferably from 1 nm to 50 nm and more preferably from 1 nm to 15 nm. The particle size is measured by using transmission electron microscopy (TEM).

The core of the NCs is surrounded by at least one ligand. Preferably, the whole surface of the NCs is covered by ligands. It is believed by the theory that when the whole surface of the NC is covered by ligands the optical performance of the NC is better.

Suitable ligands for use in the present invention are alkyl phosphines, alkyl phosphine oxides, amines, thiols, polythiols, carboxylic acids and similar compounds and mixtures thereof.

Examples of suitable alkyl phosphines for use in the present invention as a ligand are tri-n-octylphosphine, trishydroxylpropylphosphine, tributylphosphine, tri(dodecyl)phosphine, dibutyl-phosphite, tributyl phosphite, trioctadecyl phosphite, trilauryl phosphite, tris(tridecyl) phosphite, triisodecyl phosphite, bis(2-ethylhexyl)phosphate, tris(tridecyl) phosphate and mixtures thereof.

Example of suitable alkyl phosphine oxides for use in the present invention as a ligand is tri-n-octylphosphine oxide.

Examples of suitable amines for use in the present invention as a ligand are oleylamine, hexadecylamine, octadecylamine, bis(2-ethylhexyl)amine, dioctylamine, trioctylamine, octylamine, dodecylamine/laurylamine, didodecylamine, tridodecylamine, dioctadecylamine, trioctadecylamine and mixtures thereof.

Examples of suitable thiol for use in the present invention as a ligand is 1-dodecanethiol.

Examples of suitable thiols for use in the present invention as a ligand are pentaerythritol tetrakis (3-mercaptobutylate), pentaerythritol tetrakis(3-mercaptopropionate), trimethylolpropane tri(3-mercaptopropionate), tris[2-(3-mercaptopropionyloxy) ethyl]isocyanurate, dipenta- erythritol hexakis(3-mercaptopropionate), ethoxilatedtrimethylolpropan tri-3-mercapto-propionate and mixtures thereof.

Thiols can also be used in the present invention in their deprotonated form.

Examples of suitable carboxylic acids and phosphonic acids for use in the present invention as a ligand are oleic acid, phenylphosphonic acid, hexylphosphonic acid, tetradecylphosphonic acid, octylphosphonic acid, octadecylphosphonic acid, propylenediphosphonic acid, phenylphosphonic acid, aminohexylphosphonic acid and mixtures thereof.

Carboxylic acids and phosphonic acids can also be used in the present invention in their deprotonated form.

Examples of other suitable ligands for use in the present invention are dioctyl ether, diphenyl ether, methyl myristate, octyl octanoate, hexyl octanoate, pyridine and mixtures thereof. Suitable and selected ligands stabilize the NCs in a solution.

Commercially available NC for use in the present invention is for example CdSeS/ZnS from Sigma Aldrich.

A NC composite according to the present invention comprises NCs by weight of the total weight of the composite, from 0.05 to 7.5%, preferably from 0.1 to 5%.

NC composites could also be prepared with higher NC quantity, however, if the quantity is >10% the optical properties of the QDs will be negatively affected due to interactions between them. On the other hand if the quantity is <0.01%, the formed films would exhibit very low brightness.

According to the present invention NCs are embedded into the polymeric matrix. Suitable polymeric matrix for the present invention is a polythiourethane matrix.

A polythiourethane matrix according to the present invention is formed by thermal or UV induced nucleophilic addition of polyisocyanates having at least two isocyanate groups and polythiols having at least two thiol groups.

The Applicant has discovered that the polythiourethane matrix provides improved thermal and photothermal stability to the NCs.

A polythiourethane matrix according to the present invention is formed from polythiols having at least two thiol groups. Preferably, the polythiols have a functionality from 2 to 6, preferably from 2 to 4. Functionality equal or greater than 2, and preferably between 2 and 4 provides ideal crosslinking degree for the polymer.

Suitable polythiols for use in the present invention are selected from the group consisting of 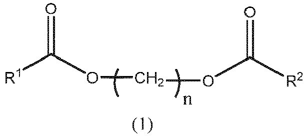 wherein n is 2 - 10, R¹ and R² are same or different and are independently selected from - CH₂-CH(SH)CH₃ and -CH₂-CH₂-SH; 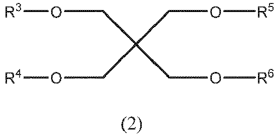 wherein R³, R⁴, R⁵ and R⁶ are same or different and are independently selected from-C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃; 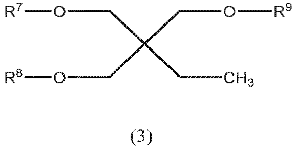 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH,-C(O)-CH(SH)-CH₃ and o is 1-10; 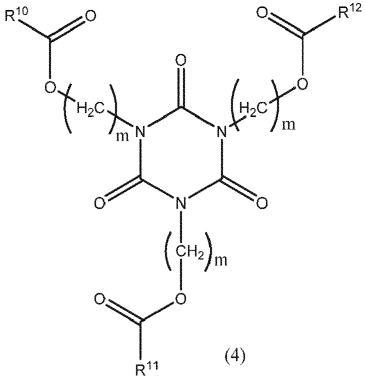 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃, and mixtures thereof.

More preferably polythiol is selected from the group consisting of glycol di(3-mercaptopropionate), pentaerythritol tetrakis (3-mercaptobutylate). 1,3,5-tris(3-mercaptobutyloxethyl)-1,3,5-triazine-2,4,6(1H,3H,5H)-trione, 1,4-bis (3-mercaptobutylyloxy) butane, tris[2-(3-mercaptopropionyloxy)ethyl]isocyanurate, pentaerythritol tetra(3-mercaptopropionate), trimethylolpropane tris(3-mercaptopropionate), trimethylolpropane tris(3-mercaptobutyrate) ethoxylated-trimethylolpropan tri-3-mercaptopropionate, dipentaerythritol hexakis (3-mercaptopropionate) and mixtures thereof.

Preferred thiols are desired due the fact that they provide appropriate viscosity and thermal curing speed (within minutes to 1 hour). In addition, preferred thiols in combination with selected polyisocyates and NCs result in a film with the desired mechanical properties - a film, which is not too brittle or rubbery.

Commercially available polythiol suitable for use in the present invention is KarenzMT™PE1 from Showa Denko and Thiocure®PETMP from Bruno Bock.

A polythiourethane matrix according to the present invention is formed from polyisocyanates having at least two isocyanate groups. Preferably, said polyisocyanate has a functionality from 2 to 4, preferably from 2 to 3. Functionality above 2, and preferably between 2 and 3 provides ideal crosslinking degree for the polymer.

Suitable polyisocyanates for use in the present invention are polyisocyanates based on isocyanates selected from the group consisting of 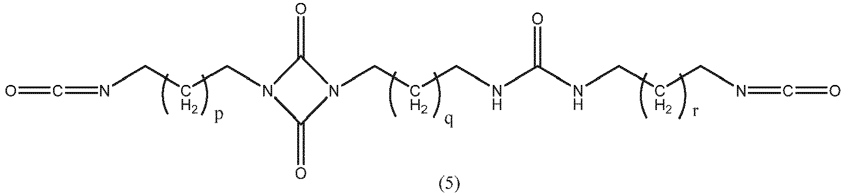 wherein p, q and r are same or different and have a value 2-10, preferably p, q and r are same and have a value 4; 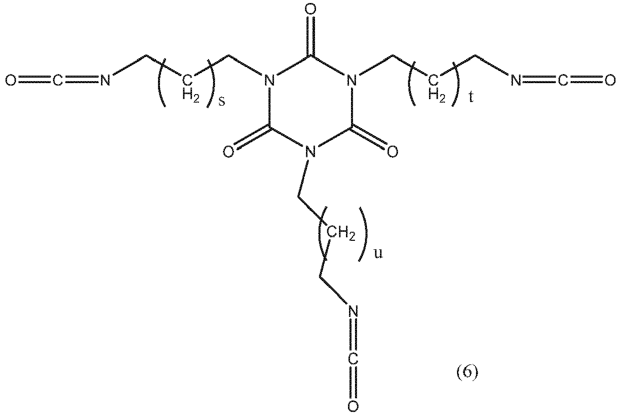 wherein s, t and u are same or different and have a value 2-10, preferably s, t and u are same and have a value 4; 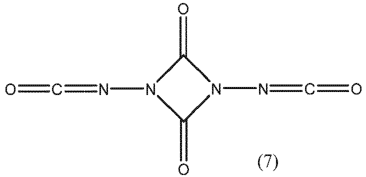 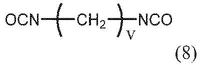 wherein v has a value 2-10, preferably v has a value 4-6, and more preferably v is 6; 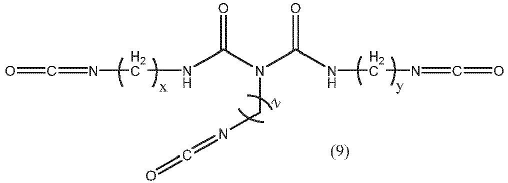 wherein x, y and z are same or different and have a value 2-10, preferably a value 4-6, and more preferably x, y and z are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof.

Preferably, suitable polyisocyanate is based on isocyanate selected from the group consisting of 2,2'-diphenylmethane diisocyanate, 2,4'- diphenylmethane diisocyanate, 4,4'-diphenylmethane diisocyanate, 4,4'-diisocyanatodicyclohexylmethane, 1,6'-hexamethylene diisocyanate, 2,4'-diisocyanatotoluene, 2,6'-diisocyanatotoluene, and mixtures thereof. Particularly preferred diisocyanate is 1,6'-hexamethylene diisocyanate.

Polyisocyanate based on hexamethylene diisocyanates (HDI), formula (8) wherein v is 6 and formula (9) wherein x, y, z is 6 are preferred, because polyisocyanates based on HDI are solvent-free, have a low viscosity, provide fast curing speed and desired mechanical properties. In addition, polyisocyanates based on HDI are transparent, and therefore, suitable and desired for use in nanocrystal films, wherein good optical properties are required.

Commercially available polyisocyanate suitable for use in the present invention is Desmodur N3200 from Covestro, formerly Bayer MaterialScience.

Polymeric matrix according to the present invention comprises polythiols from 10 to 90% by weight of the total weight of the polymeric matrix, preferably from 30 to 70%.

Polymeric matrix according to the present invention comprises polyisocyanates from 10 to 90% by weight of the total weight of the polymeric matrix, preferably from 30 to 70%.

The preferred ratio between polyisocyanate and polythiol is around 50:50 by weight. Having excess of polyisocyanate or polythiol will decrease the nanocrystal stability of the matrix. However, the ratio varies according to the functionality of used polythiols and polyisocyanates functionalities. If one of the two components of the polymeric matrix is less than 10%, the resulting material would be a liquid, or a very soft and tacky solid, and therefore, not meeting the required mechanical properties of the polymeric matrix.

A NC composite according to the present invention comprises a polymer matrix from 90 to 99.99% by weight of the total weight of the composite, preferably from 92.5 to 99.95%, more preferably from 95 to 99.9%. If the matrix quantity is lower than 90%, the quantity of NCs is more than 10%, the optical properties of the QDs will be negatively affected due to interactions between them.

The NC composites according to the present invention may be cured by a thermal initiator, which is preferably a base or by a photoinitiator, which releases a base upon excitation by light.

The NC composites according to the present invention may further comprise a photoinitiator or a thermal initiator.

Suitable thermal initiators for use in the present invention are organic bases such as dimethylacetamide, dimethylformamide, triethylamine among others.

A NC composite according to the present invention may comprise a thermal initiator from 0 to 5% by weight of the total weight of the composite, preferably from 0.001 to 5%, more preferably from 0.01 to 3% and more preferably from 0.01 to 2%.

Suitable photoinitiators for use in the present invention are for example 1,5,7-triazabicyclo[4.4.0]dec-5-ene · hydrogen tetraphenyl borate (TBD·HBPh₄), 2-methyl-4-(methylthio)-2-morpholinopropiophenone, 2-(9-oxoxanthen-2-yl)propionic acid-1,5,7 triazabicyclo[4.4.0]dec-5-ene and isopropylthioxanthone (ITX) and mixtures thereof.

A NC composite according to the present invention may further comprise a photoinitator from 0 to 5% by weight of the total weight of the composite, preferably from 0.01 to 5%, more preferably from 0.01 to 3% and more preferably from 0.01 to 2%.

NC composites according to the present invention are solid after the cure at room temperature.

A NC-composite according to the present invention have NCs embedded into the polymer matrix. NCs are solid and integral part of the network structure. The structure allows maintenance of the optical properties of the NCs. Furthermore, this structure allows to achieve high loadings due to the high compatibility of the NCs with the thiourethane matrix. In addition to above, the structure provides improved thermal stability and moisture stability.

The polythiourethane matrix provides better protection against oxidation and/or other degradation processes.

The NCs suitable for use in the present invention are prepared by using known processes from the literature or acquired commercially. Suitable NCs can be prepared in several ways of mixing all reactants together. The NC composites according to the present invention can be produced from the various NCs with various different kind of ligands. The present invention does not involve a ligand exchange.

The NC composites according to the present invention can be prepared in several ways of mixing all ingredients together.

In one embodiment, the preparation of the NC composites according to the present invention comprises following steps:
1) mixing NCs and polyisocyanate monomers and/or oligomers;
2) adding polythiols to form the polymer matrix and mixing;
3) curing with UV light and/or electron beam and/or temperature.

In another embodiment, the preparation of the NC composites according to the present invention comprises following steps:
1) mixing NCs and polythiols;
2) adding polyisocyanate monomers and/or oligomers to form the polymer matrix and mixing;
3) curing with UV light and/or electron beam and/or temperature.

Yet, in another embodiment, the preparation of the NC composites according to the present invention comprises following steps:
1) mixing polyisocyanate monomers and/or oligomers and polythiols to form the polymeric matrix;
2) adding NCs and mixing;
3) curing with UV light and/or electron beam and/or temperature.

In preferred embodiment, NCs are added to polythiols.

Thermal curing temperature is preferably from 20°C to 250°C, more preferably from 80°C to 125°C. In addition, thermal curing time is preferably from 1 minute to 24 hour, more preferably from 5 minutes to 2 hours.

Photo curing UV intensity is preferably from 1 to 1000 mW/cm², more preferably from 50 to 500 mW/cm². In addition, photo curing time is preferably from 1 second to 500 seconds, more preferably from 1 second to 60 seconds.

The polymerisation of the matrix takes a place in the presence of NCs and at the same time the NCs are fixed into the matrix. This way, the benefits of the resin matrix are provided to the NCs.

As shown in the examples below, the polythiourethane matrix provides improved thermal and photothermal stability when compared to prior art. This can be attributed to their better stability against oxidation during the accelerated operating conditions, opening the possibility towards a barrier-free configuration.

The present invention encompasses also a cured NC composite according to the present invention.

The NC composite according to the present invention can be used in various products. Some examples are for example a display device, a light emitting device, a photovoltaic cell, a photodetector, an energy converter device, a laser, a sensor, a thermoelectric device, a security ink, lighting device and in catalytic or biomedical applications.

NC composite according to the present invention can be used as a source of photoluminescence or electroluminescence.

### Examples

### Example 1

### CdSeS/ZnS in a polythiourethane matrix

1.15 g (57.5 wt.%) of aliphatic polyisocyanate (Desmodur N3200) and 0.85 g (42.5 wt.%) of pentaerythritol tetrakis (3-mercaptobutylate) (KarenzMT™ PE1) including 0.002 g of semiconductor NC (CdSeS/ZnS) were mixed in a conditioning mixer for 2 minutes at 2000 rpm. Subsequently, the mixture was dispensed into an aluminium cup, and thermally cured for 1 hour at 100°C. A solid semiconductor NC composite was obtained. The photoluminescent quantum yield (QY) evolution of the NC composite was studied under different experimental conditions:
A NC-composite was aged in a box oven set at 85°C. The normalized QY was tracked for 3 weeks and is shown in the table 1 below:

**Table 1**

| ***Day 0*** | ***Day 1*** | ***Day 7*** | ***Day 14*** | ***Day 21*** |
|---|---|---|---|---|
| 100.0% | 103.7% | 101.4% | 101.0% | 104.1% |

Another sample of NC-composite was aged in a custom-built photo-thermal ageing chamber at 1 W/cm² at 75°C. The excitation wavelength was 460 nm. The QY evolution was tracked for 3 weeks. The measured values are indicated in table 2 below:

**Table 2**

| ***Day 0*** | ***Day 1*** | ***Day 7*** | ***Day 14*** | ***Day 21*** |
|---|---|---|---|---|
| 100.0% | 118.9% | 112.8% | 101.6% | 83.3% |

### Example 2

### CdSeS/ZnS in a polythiourethane matrix vs. polyurethane matrix vs. acrylate-thiol matrix

1.0 g (50 wt.%) of aliphatic polyisocyanate (Desmodur® N3200) and 1.0 g (50 wt.%) of pentaerythritol tetrakis (3-mercaptobutylate) (KarenzMT™ PE1) including 0.002 g of semiconductor NC (CdSeS/ZnS) were mixed in a conditioning mixer for 2 minutes at 2000 rpm. Subsequently, the mixture was dispensed into an aluminium cup and thermally cured for 1 hour at 100°C. A solid semiconductor NC composite based was obtained.

0.42 g (21 wt.%) of aliphatic polyisocyanate (Desmodur® N3200) and 1.58 g (79 wt.%) of a polyol (Desmophen® C1100) including 0.002 g of semiconductor NC (CdSeS/ZnS) were mixed in a conditioning mixer for 2 minutes at 2000 rpm. Subsequently, the mixture was dispensed into an aluminium cup and thermally cured for 2 hour at 100°C. A solid semiconductor NC composite was obtained.

0.9 g (45 wt.%) of polyester acrylate oligomer (Sartomer CN2505), 0.1 g (5 wt.%) of methacrylate monomer (triethylene glycol dimethacrylate A) and 1.0 g (50.0 wt.%) of pentaerythritol tetrakis (3-mercaptobutylate) (KarenzMT™ PE1) including 0.002 g of semiconductor NC (CdSeS/ZnS) and 0.05 g of 2-hydroxy-2-methyl-1-phenyl-propan-1-one (Darocur 1173) were mixed in a conditioning mixer for 2 minutes at 2000 rpm. Subsequently, the mixture was dispensed into an aluminium cup and photocured by exposing to UV radiation of 120 mW/cm² (UV-A dose) during 60 seconds. Afterwards, the sample was post-cured at 90°C for 2 hours. A solid semiconductor NC composite was obtained.

The photoluminescent quantum yield (QY) evolution of the NC composites was studied under different experimental conditions:
The NC-composites were aged in a box oven set at 85°C. The normalized QY was tracked for 3 weeks and is shown in the table 3 below:

**Table 3**

| | ***Day 0*** | ***Day 1*** | ***Day 7*** | ***Day 14*** | ***Day 21*** |
|---|---|---|---|---|---|
| Polythiourethane | 100.0% | 116.0% | 123.3% | 123.3% | 122.9% |
| Polyurethane | 100.0% | 45.7% | 4.0% | - | - |
| Acrylate-th iol | 100.0% | 86.6% | 81.2% | 77.1% | 75.8% |

The NC-composites were aged in a custom-built photo-thermal ageing chamber at 1 W/cm² at 75°C. The excitation wavelength was 460 nm. The QY evolution was tracked for 3 weeks. The measured values are indicated in table 4 below:

**Table 4**

| | ***Day 0*** | ***Day 1*** | ***Day 7*** | ***Day 14*** | ***Day 21*** |
|---|---|---|---|---|---|
| Polythiourethane | 100.0% | 134.4% | 131.2% | 137.2% | 140.2% |
| Polyurethane | 100.0% | 71.2% | 44.6% | - | - |
| Acrylate-thiol | 100.0% | 61.4% | 50.5% | 44.2% | - |

### Example 3

### CdSe/CdS in a polythiourethane matrix

1.0 g (50 wt.%) of aliphatic polyisocyanate (Desmodur N3200) and 1.0 g (50 wt.%) of pentaerythritol tetrakis (3-mercaptobutylate) (KarenzMT™ PE1) including 0.0015 g of semiconductor NC (CdSe/CdS) were mixed in a conditioning mixer for 2 minutes at 2000 rpm. Subsequently, the mixture was dispensed under ambient conditions into an aluminium cup and thermally cured for 1 hour at 100°C. A solid semiconductor NC composite was obtained. The photoluminescent QY evolution of the NC composite was studied under different experimental conditions:
A NC-composite was aged in a box oven set at 85°C. The normalized QY was tracked for 1 week and is shown in the table 5 below:

**Table 5**

| ***Day 0*** | ***Day 1*** | ***Day 3*** | ***Day 7*** |
|---|---|---|---|
| 100.0% | 109.9% | 106.9% | 110.8% |

Another sample of NC-composite was aged in a custom-built photo-thermal ageing chamber at 1 W/cm² at 75°C. The excitation wavelength was 460 nm. The QY evolution was tracked for 1 week. The measured values are indicated in table 6 below:

**Table 6**

| ***Day 0*** | ***Day 1*** | ***Day 3*** | ***Day 7*** |
|---|---|---|---|
| 100.0% | 138.4% | 137.6% | 141.5% |

### Example 4

### CuInS/ZnS in a polythiourethane matrix vs. acrylate-thiol matrix

1.0 g (50 wt.%) of aliphatic polyisocyanate (Desmodur N3200) and 1.0 g (50 wt.%) of pentaerythritol tetrakis (3-mercaptobutylate) (KarenzMT™ PE1) including 0.003 g of semiconductor NC (CuInS/ZnS) were mixed in a conditioning mixer for 2 minutes at 2000 rpm. Subsequently, the mixture was dispensed under ambient conditions into an aluminium cup and thermally cured for 1 hour at 100°C. A solid semiconductor NC composite was obtained.

0.9 g (45 wt.%) of polyester acrylate oligomer (Sartomer CN2505), 0.1 g (5 wt.%) of methacrylate monomer (Triethylene glycol dimethacrylate A) and 1.0 g (50.0 wt.%) of pentaerythritol tetrakis (3-mercaptobutylate) (KarenzMT™ PE1) including 0.003 g of semiconductor NC (CuInS/ZnS) and 0.05 g of 2-hydroxy-2-methyl-1-phenyl-propan-1-one (Darocur 1173) were mixed in a conditioning mixerfor2 minutes at 2000 rpm. Subsequently, the mixture was dispensed into an aluminium cup and photocured by exposing to UV radiation of 120 mW/cm² (UV-A dose) during 60 seconds. Afterwards, the sample was post-cured at 90°C for 2 hours. A solid semiconductor NC composite was obtained.

A NC-composite was aged in a box oven set at 85°C. The normalized QY was tracked for 1 week and is shown in the table 7 below:

**Table 7**

| | ***Day 0*** | ***Day 1*** | ***Day 4*** | ***Day 7*** |
|---|---|---|---|---|
| Polythiourethane | 100.0% | 101.2% | 97.7% | 99.8% |
| Acrylate-thiol | 100.0% | 97.8% | 92.2% | 83.5% |

Another sample of NC-composite was aged in a custom-built photo-thermal ageing chamber at 1 W/cm² at 75°C. The excitation wavelength was 460 nm. The QY evolution was tracked for 1 week. The measured values are indicated in table 8 below:

**Table 8**

| | ***Day 0*** | ***Day 1*** | ***Day 4*** | ***Day 7*** |
|---|---|---|---|---|
| Polythiourethane | 100.0% | 35.0% | 5.5% | 0.0% |
| Acrylate-thiol | 100.0% | 0.0% | - | - |

### Example 5

### CdSeS/ZnS in a polythiourethane matrix

1.0 g (50 wt.%) of aliphatic polyisocyanate (Desmodur N3200) and 1.0 g (50 wt.%) of pentaerythritol tetra(3-mercaptopropionate) (Thiocure® PETMP) including 0.01 g of semiconductor NC (CdSeS/ZnS) were mixed in a conditioning mixer for 2 minutes at 2000 rpm. Subsequently, the mixture was coated on top of an aluminium substrate under ambient conditions and thermally cured for 15 minutes at 100°C. A solid semiconductor NC composite with a thickness of 100 µm was obtained. The photoluminescent QY evolution of the NC composite was studied under different experimental conditions:
A NC-composite was aged in a box oven set at 85°C. The normalized QY was tracked for 3 weeks and is shown in the table 9 below:

**Table 9**

| ***Day 0*** | ***Day 1*** | ***Day 7*** | ***Day 14*** | ***Day 21*** |
|---|---|---|---|---|
| 100.0% | 105.1% | 104.1% | 108.1% | 103.0% |

Another sample of NC-composite was aged in a custom-built photo-thermal ageing chamber at 1 W/cm² at 75°C. The excitation wavelength was 460 nm. The QY evolution was tracked for 3 weeks. The measured values are indicated in table 10 below:

**Table 10**

| ***Day 0*** | ***Day 1*** | ***Day 7*** | ***Day 14*** | ***Day 21*** |
|---|---|---|---|---|
| 100.0% | 121.7% | 97.2% | 89.7% | 74.4% |

### Example 6

### CdSe/ZnS in a polythiourethane matrix formed with photolatent base

1.0 g (50 wt.%) of aliphatic polyisocyanate (Desmodur N3200) and 1.0 g (50 wt.%) of glycol di(3-mercaptopropionate) (GDMP) including 0.002 g of semiconductor NC (CdSe/ZnS) and 0.01 g of TBD·HBPh₄ photolatent base initiator were mixed in a conditioning mixer for 2 minutes at 2000 rpm. Subsequently, the mixture was dispensed under ambient conditions into an aluminium cup and photocured by exposing to UV radiation of 120 mW/cm² (UV-A dose) during 140 seconds. A solid semiconductor NC composite was obtained

### Example 7

### CdSe/ZnS in a polythiourethane matrix formed with different polythiols

### Example 7.1

0.99 g of aliphatic polyisocyanate (Desmodur N3200) and 0.99 g of glycol di(3-mercaptopropionate) including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 120 minutes at 100°C. A solid semiconductor NC composite was obtained.

### Example 7.2

0.99 g of aliphatic polyisocyanate (Desmodur N3200) and 1.0 g of trimethylolpropane tris(3-mercaptobutyrate) including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 90 minutes at 100°C. A solid semiconductor NC composite was obtained.

### Example 7.3

0.99 g of aliphatic polyisocyanate (Desmodur N3200) and 1.0 g of pentaerythritol tetra(3-mercaptopropionate) including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 10 minutes at 100°C. A solid semiconductor NC composite was obtained.

### Example 7.4

0.99 g of aliphatic polyisocyanate (Desmodur N3200) and 1.0 g of pentaerythritol tetrakis (3-mercaptobutylate) including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 15 minutes at 100°C. A solid semiconductor NC composite was obtained.

### Example 7.5

0.99 g of aliphatic polyisocyanate (Desmodur N3200) and 0.96 g of dipentaerythritol hexakis (3-mercaptopropionate) including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 60 minutes at 100°C. A solid semiconductor NC composite was obtained.

### Example 7.6

0.99 g of aliphatic polyisocyanate (Desmodur N3200) and 1.32 g of tris[2-(3-mercaptopropionyloxy)ethyl]isocyanurate including 0.002 g of semiconductor NC (CdSe/ZnS) were mixed in a conditioning mixer for 2 minutes at 2000 rpm. Subsequently, the mixture was dispensed under ambient conditions into an aluminium cup and thermally cured for 45 minutes at 100°C. A solid semiconductor NC composite was obtained.

### Example 8

### Polythiourethane matrix formed with different polyisocyanates

### Example 8.1

0.50 g of (Cu:ZnlnS/ZnS/ZnS-TEMPIC), 0.5 g of tris[2-(3-mercaptopropionyloxy)ethyl] isocyanurate (TEMPIC) and 1.0 g of aliphatic polyisocyanate HDI Biuret (Desmodur N3200) were mixed in a conditioning mixer for 2 minutes at 2000 rpm. Subsequently, the mixture was dispensed under ambient conditions into an aluminium cup and thermally cured for 60 minutes at 100°C. A solid semiconductor NC composite was obtained.

### Example 8.2

0.50 g of (Cu:ZnlnS/ZnS/ZnS-TEMPIC), 0.5 g of tris[2-(3-mercaptopropionyloxy)ethyl] isocyanurate (TEMPIC) and 1.0 g of aliphatic polyisocyanate HDI Trimer (Desmodur N3300) were mixed in a conditioning mixer for 2 minutes at 2000 rpm. Subsequently, the mixture was dispensed under ambient conditions into an aluminium cup and thermally cured for 60 minutes at 100°C. A solid semiconductor NC composite was obtained.

## Claims

1. A nanocrystal composite comprising
a) from 0.05 to 7.5% by weight of the total weight of the composite of a plurality of nanocrystals comprising a core comprising a metal or a semiconductive compound or a mixture thereof and at least one ligand, wherein said core is surrounded by at least one ligand,
b) a polythiourethane matrix, wherein said polythiourethane matrix is formed by thermal or UV induced nucleophilic addition of polyisocyanates having at least two isocyanate groups and polythiols having at least two thiol groups, wherein said polythiols are selected from the group consisting of 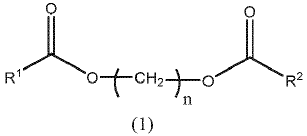 wherein n is 2 - 10, R¹ and R² are same or different and are independently selected from -CH₂-CH(SH)CH₃ and -CH₂-CH₂-SH; 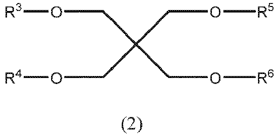 wherein R³, R⁴, R⁵ and R⁶ are same or different and are independently selected from -C(O)-CH₂-CH₂-SH, -C(O)-CH₂-CH(SH)CH₃, -CH₂-C(-CH₂-O-C(O)-CH₂-CH₂-SH)₃ -C(O)-CH₂-SH, -C(O)-CH(SH)-CH₃; 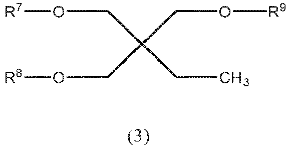 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 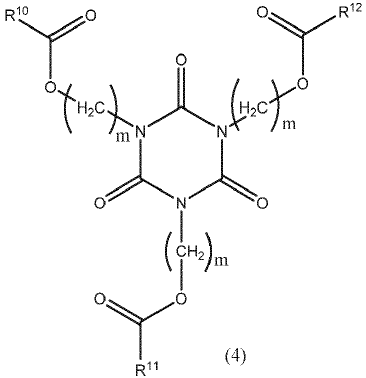 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃, and mixtures thereof
and wherein said polyisocyanates are selected from polyisocyanates based on isocyanates selected from the group consisting of 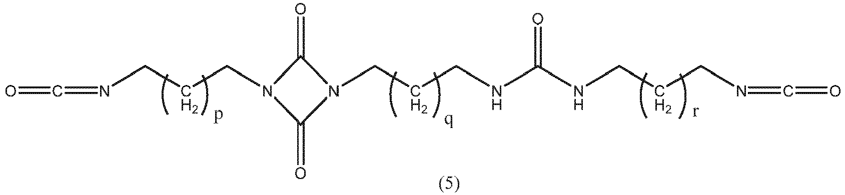 wherein p, q and r are same or different and have a value 2-10; 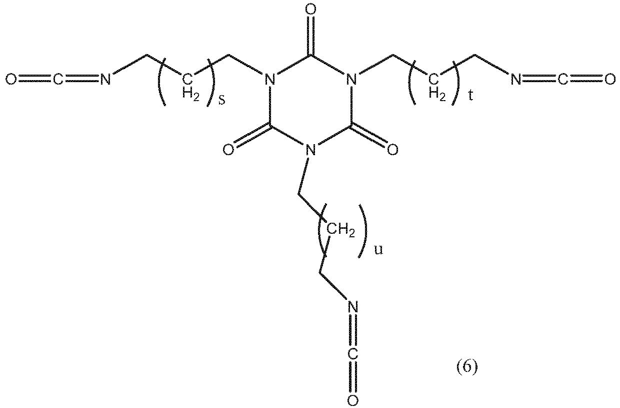 wherein s, t and u are same or different and have a value 2-10; 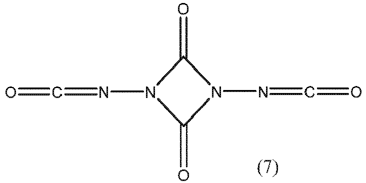 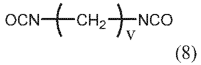 wherein v has a value 2 - 10; 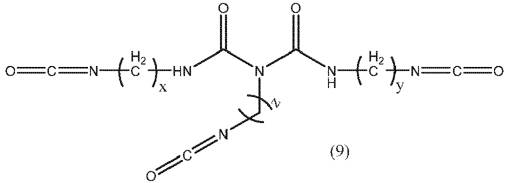 wherein x, y and z are same or different and have a value 2-10, preferably a value 4-6, and more preferably x, y and z are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof; and
wherein said nanocrystals are embedded into said polymer matrix.

2. A nanocrystal composite according to claim 1, wherein said core comprising a metal or semiconductive compound or a mixture thereof is composed of elements selected from combination of one or more different groups of the periodic table.

3. A nanocrystal composite according to claim 1 or 2, wherein said core comprises a core and at least one monolayer or multilayer shell or wherein said core comprises a core and at least two monolayer and/or multilayer shells.

4. A nanocrystal composite according to any of claims 1 to 3, wherein said metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof, preferably said metal or semiconductive compound is selected from the group consisting of Si, Ge, SiC, and SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ and AgGaSe₂.

5. A nanocrystal composite according to any of claims 1 to 4, wherein said polythiol has a functionality from 2 to 6, preferably from 2 to 4.

6. A nanocrystal composite according to any of claims 1 to 5, wherein said polythiol is selected from the group consisting of glycol di(3-mercaptopropionate), pentaerythritol tetrakis (3-mercaptobutylate). 1,3,5-tris(3-mercaptobutyloxethyl)-1,3,5-triazine-2,4,6(1H,3H,5H)-trione, 1,4-bis (3-mercaptobutylyloxy) butane, tris[2-(3-mercaptopropionyloxy)ethyl]isocyanurate, pentaerythritol tetrakis(3-mercaptopropionate), trimethylolpropane tris(3-mercaptopropionate), trimethylolpropane tris(3-mercaptobutyrate) ethoxylated-trimethylolpropan tri-3-mercaptopropionate, dipentaerythritol hexakis (3-mercaptopropionate) and mixtures thereof.

7. A nanocrystal composite according to any of claims 1 to 6, wherein said polyisocyanate has a functionality from 2 to 4, preferably from 2 to 3.

8. A nanocrystal composite according to any of claims 1 to 7, wherein said polyisocyanate is selected from the group consisting of 2,2'-diphenylmethane diisocyanate, 2,4'- diphenylmethane diisocyanate; 4,4'- diphenylmethane diisocyanate, 4,4'-diisocyanatodicyclohexylmethane, 1,6'-hexamethylene diisocyanate, 2,4'-_diisocyanatotoluene, 2,6'-diisocyanatotoluene, and mixtures thereof.

9. A nanocrystal composite according to any of claims 1 to 8 comprising said nanocrystals from 0.1 to 5%by weight of the total weight of the composite.

10. A nanocrystal composite according to any of claims 1 to 9 comprising polymer matrix from 90 to 99.99% by weight of the total weight of the composite, preferably from 92.5 to 99.95%, more preferably from 95 to 99.9%.

11. A nanocrystal composite according to any of claims 1 to 10, wherein said polythiourethane matrix is formed by UV induced nucleophilic addition, said matrix further comprises a photoinitiator from 0.01 to 5% by weight of the total weight of the polythiourethane matrix, preferably from 0.01 to 3% and more preferably from 0.01 to 2%.

12. A nanocrystal composite according to any of claims 1 to 11, wherein said polythiourethane matrix is formed by thermal induced cure, said matrix further comprises a thermal initiator from 0.01 to 5% by weight of the total weight of the polythiourethane matrix, preferably from 0.01 to 3%, more preferably from 0.01 to 2%.

13. A cured nanocrystal composite according to any of claims 1 to 12.

14. A product comprising a nanocrystal composite according to any of claims 1 to 12, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

15. Use of nanocrystal composite according to any of claims 1 to 12 as a source of photoluminescence or electroluminescence.

## Patentansprüche

1. Nanokristall-Zusammensetzung, umfassend:
a) von 0,05 bis 7,5 Gewichts-% des Gesamtgewichts der Zusammensetzung einer Vielzahl von Nanokristallen, umfassend einen Kern, umfassend ein Metall oder einen halbleitenden Stoff oder ein Gemisch davon und mindestens einen Liganden, wobei der Kern von mindestens einem Liganden umgeben ist,
b) eine Polythiourethan-Matrix, wobei die Polythiourethan-Matrix durch thermische oder UV-induzierte nukleophile Addition von Polyisocyanaten, die mindestens zwei Isocyanat-Gruppen aufweisen, und Polythiolen, die mindestens zwei Thiol-Gruppen aufweisen, ausgebildet ist, wobei die Polythiole aus der Gruppe ausgewählt sind, bestehend aus 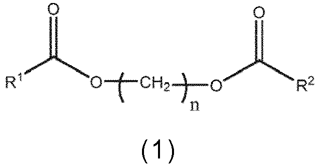 wobei n 2 bis 10 ist, R¹ und R² gleich oder unterschiedlich sind und unabhängig ausgewählt sind aus -CH₂-CH(SH)CH₃ und -CH₂-CH₂-SH; 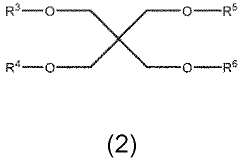 wobei R³, R⁴, R⁵ und R⁶ gleich oder unterschiedlich sind und unabhängig ausgewählt sind aus -C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃; 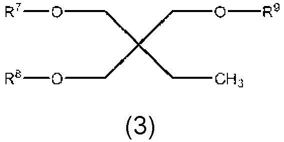 wobei R⁷, R⁸ und R⁹ gleich oder unterschiedlich sind und unabhängig ausgewählt sind aus -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ und o 1 bis 10 ist; 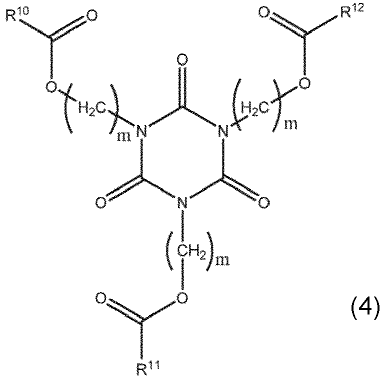 wobei m 2 bis 10 ist, R¹⁰, R¹¹ und R¹² gleich oder unterschiedlich sind und unabhängig ausgewählt sind aus -CH₂-CH₂SH, -CH₂-CH(SH)CH₃, -C(O)-CH₂-SH, -C(O)-CH(SH)-CH₃ und Mischungen davon
und wobei die Polyisocyanate aus Polyisocyanaten ausgewählt sind, die auf Isocyanaten beruhen, die aus der Gruppe ausgewählt sind, bestehend aus 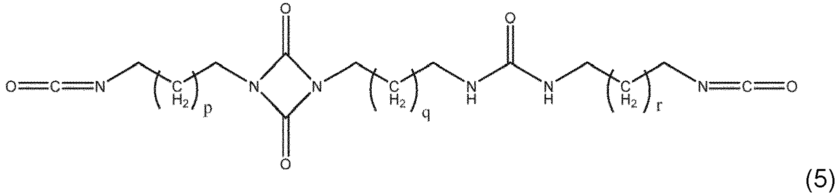 wobei p, q und r gleich oder unterschiedlich sind und einen Wert von 2 bis10 aufweisen; 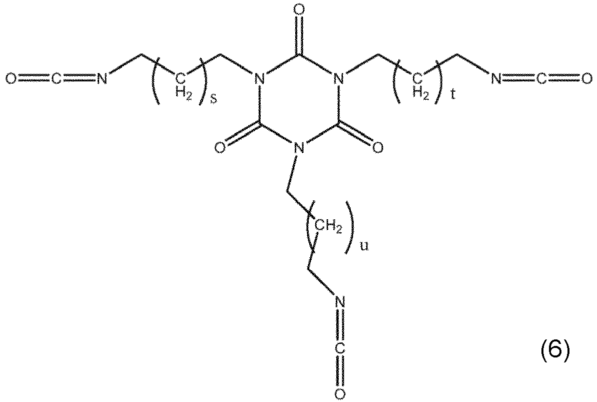 wobei s, t und u gleich oder unterschiedlich sind und einen Wert von 2 bis10 aufweisen; 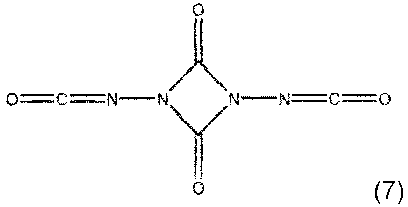 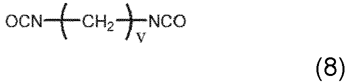 wobei v einen Wert von 2 bis 10 aufweist; 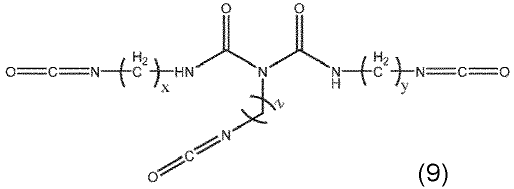 wobei x, y und z gleich oder unterschiedlich sind und einen Wert von 2 bis 10 aufweisen, vorzugsweise einen Wert von 4 bis 6, und mehr vorzugsweise sind x, y und z gleich 6;
Polyisocyanate auf der Grundlage von Toluoldiisocyanat; Polyisocyanate auf der Grundlage von Methylen-Diphenyl-Diisocyanat; Polyisocyanate auf der Grundlage von Isophorondiisocyanat; Vorpolymere auf der Grundlage von Toluoldiisocyanat; Vorpolymere auf der Grundlage von Methylen-Diphenyl-Diisocyanat; Vorpolymere auf der Grundlage von Isophorondiisocyanat, Vorpolymere auf der Grundlage von Hexamethylen-Diisocyanat und Mischungen davon; und
wobei die Nanokristalle in die Polymermatrix eingebettet sind.

2. Nanokristall-Zusammensetzung nach Anspruch 1, wobei der Kern, der ein Metall oder einen halbleitenden Stoff oder ein Gemisch davon umfasst, aus Elementen zusammengesetzt ist, die aus einer Kombination einer oder mehrerer verschiedener Gruppen des Periodensystems der Elemente ausgewählt sind.

3. Nanokristall-Zusammensetzung nach Anspruch 1 oder 2, wobei der Kern einen Kern und mindestens eine einschichtige oder mehrschichtige Hülle umfasst, oder wobei der Kern einen Kern und mindestens zwei einschichtige und/oder mehrschichtige Hüllen umfasst.

4. Nanokristall-Zusammensetzung nach einem beliebigen der Ansprüche 1 bis 3, wobei das Metall oder der halbleitenden Stoff eine Kombination eines oder mehrerer Elemente ist, die aus der Gruppe IV ausgewählt sind; eines oder mehrerer Elemente, die aus den Gruppen II und VI ausgewählt sind; eines oder mehrerer Elemente, die aus den Gruppen III und V ausgewählt sind; eines oder mehrerer Elemente, die aus den Gruppen IV und VI ausgewählt sind; eines oder mehrerer Elemente, die aus den Gruppen I und III und VI ausgewählt sind oder eine Kombination davon, wobei vorzugsweise das Metall oder der halbleitende Stoff aus der Gruppe ausgewählt ist, die aus Si, Ge, SiC, and SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ und AgGaSe₂ besteht.

5. Nanokristall-Zusammensetzung nach einem beliebigen der Ansprüche 1 bis 4, wobei das Polythiol eine Funktionalität von 2 bis 6, vorzugsweise von 2 bis 4 aufweist.

6. Nanokristall-Zusammensetzung nach einem beliebigen der Ansprüche 1 bis 5, wobei das Polythiol aus einer Gruppe ausgewählt ist, die aus Glycol Di(3-Mercaptopropionat), Pentaerythritol Tetrakis (3-Mercaptobutylat), 1,3,5-tris(3-Mercaptobutyloxethyl)- 1,3,5-Triazin-2,4,6(1H,3H,5H)-trion, 1,4-bis(3-Mercaptobutylyloxy) Butan, tris[2-(3-Mercaptopropionyloxy)ethyl]isocyanurat, Pentaerythritol Tetrakis(3-Mercaptopropionat), Trimethylolpropan tris(3-Mercaptopropionat), Trimethylolpropan tris(3-Mercaptobutyrat) Ethoxyliertes-Trimethylolpropan tri-3-Mercaptopropionat, Dipentaerythritol Hexakis (3-Mercaptopropionat) und Mischungen daraus besteht.

7. Nanokristall-Zusammensetzung nach einem beliebigen der Ansprüche 1 bis 6, wobei das Polyisocyanat eine Funktionalität von 2 bis 4, vorzugsweise von 2 bis 3 aufweist.

8. Nanokristall-Zusammensetzung nach einem beliebigen der Ansprüche 1 bis 7, wobei das Polyisocyanat aus der Gruppe ausgewählt ist, die aus 2,2'-Diphenylmethan diisocyanat, 2,4'-Diphenylmethan diisocyanat; 4,4'-Diphenylmethan diisocyanat, 4,4'-Diisocyanatodicyclohexylmethan, 1,6'-Hexamethylendiisocyanat, 2,4'-Diisocyanatotoluen, 2,6'-Diisocyanatotoluen und Mischungen daraus besteht.

9. Nanokristall-Zusammensetzung nach einem beliebigen der Ansprüche 1 bis 8, wobei die Nanokristalle von 0,1 bis 5 Gewichts-% des Gesamtgewichts der Zusammensetzung umfassen.

10. Nanokristall-Zusammensetzung nach einem beliebigen der Ansprüche 1 bis 9, umfassend eine Polymermatrix von 90 bis 99,99 Gewichts-% des Gesamtgewichts der Zusammensetzung, vorzugsweise von 92,5 bis 99,95%, mehr vorzugsweise von 95 bis 99,9%.

11. Nanokristall-Zusammensetzung nach einem beliebigen der Ansprüche 1 bis 10, wobei die Polythiourethan-Matrix durch UV-induzierte nukleophile Addition ausgebildet ist, wobei die Matrix ferner einen Photoinitiator von 0,01 bis 5 Gewichts-% des Gesamtgewichts der Polythiourethan-Matrix, vorzugsweise von 0,01 bis 3% und mehr vorzugsweise von 0,01 bis 2% umfasst.

12. Nanokristall-Zusammensetzung nach einem beliebigen der Ansprüche 1 bis 11, wobei die Polythiourethan-Matrix durch thermisch induziertes Aushärten ausgebildet ist, wobei die Matrix ferner einen thermischen Initiator von 0,01 bis 5 Gewichts-% des Gesamtgewichts der Polythiourethan-Matrix, vorzugsweise von 0,01 bis 3% und mehr vorzugsweise von 0,01 bis 2% umfasst.

13. Ausgehärtete Nanokristall-Zusammensetzung nach einem beliebigen der Ansprüche 1 bis 12.

14. Produkt, umfassend eine Nanokristall-Zusammensetzung nach einem beliebigen der Ansprüche 1 bis 12, wobei das Produkt aus der Gruppe ausgewählt ist, die aus einer Anzeigevorrichtung, einer Licht emittierenden Vorrichtung, einer Photovoltaik-Zelle, einem Photodetektor, einer Energieumwandlungsvorrichtung, einem Laser, einem Sensor, einer thermoelektrischen Vorrichtung, einer Sicherheitsdruckfarbe, einer Beleuchtungsvorrichtung und katalytischen oder biomedizinischen Anwendungen besteht.

15. Verwendung einer Nanokristall-Zusammensetzung nach einem beliebigen der Ansprüche 1 bis 12 als Quelle von Photolumineszenz oder Elektrolumineszenz.

## Revendications

1. Composite nanocristallin comprenant
a) de 0,05 % à 7,5 % en poids du poids total du composite d'une pluralité de nanocristaux comprenant un noyau comprenant un métal ou un composé semi-conducteur ou un mélange de ceux-ci et au moins un ligand, dans lequel ledit noyau est entouré par au moins un ligand,
b) une matrice de polythiouréthane, dans lequel ladite matrice de polythiouréthane est formée par addition nucléophile induite thermiquement ou par UV de polyisocyanates ayant au moins deux groupes isocyanate et de polythiols ayant au moins deux groupes thiol, dans lequel lesdits polythiols sont sélectionnés dans le groupe constitué par 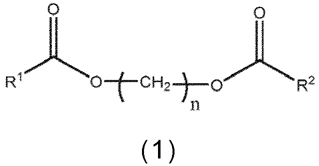 dans lequel n est 2 - 10, R¹ et R² sont identiques ou différents et sont choisis indépendamment l'un de l'autre parmi -CH₂-CH(SH)CH₃ et -CH₂-CH₂-SH ; 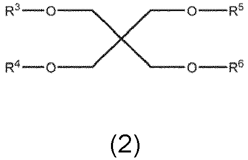 dans lequel R³, R⁴, R⁵ et R⁶ sont identiques ou différents et sont choisis indépendamment les uns des autres parmi -C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃ ; 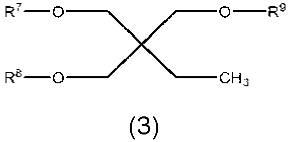 dans lequel R⁷, R⁸ et R⁹ sont identiques ou différents et sont choisis indépendamment les uns des autres parmi -C(O)-CH₂-CH₂-SH, - C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ et o est 1-10 ; 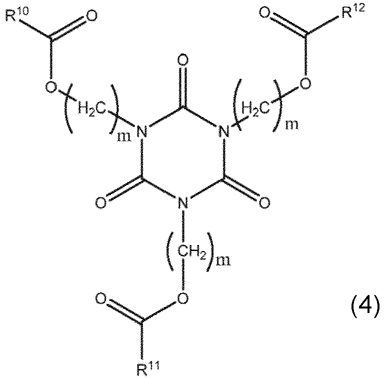 dans lequel m est 2-10, R¹⁰, R¹¹ et R¹² sont identiques ou différents et sont choisis indépendamment les uns des autres parmi -CH₂-CH₂SH, -CH₂-CH(SH)CH₃, -C(O)-CH₂-SH, -C(O)-CH(SH)-CH₃ et leurs mélanges,
et dans lequel lesdits polyisocyanates sont sélectionnés parmi des polyisocyanates à base d'isocyanates sélectionnés dans le groupe constitué par 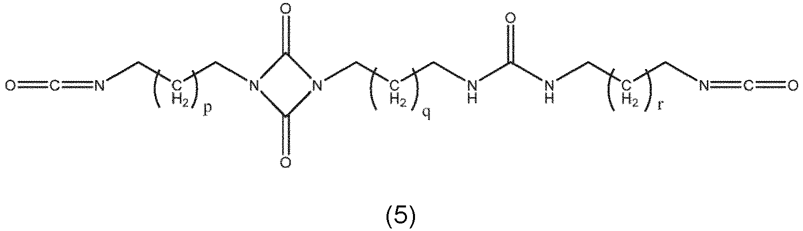 dans lequel p, q et r sont identiques ou différents et ont une valeur de 2-10 ; 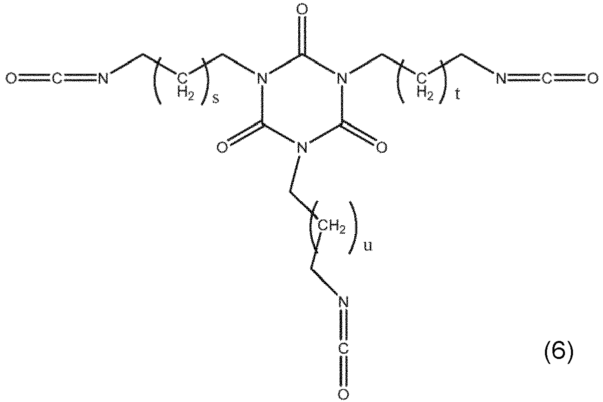 dans lequel s, t et u sont identiques ou différents et ont une valeur de 2-10 ; 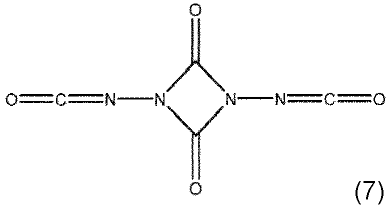 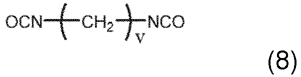 dans lequel v a une valeur de 2-10 ; 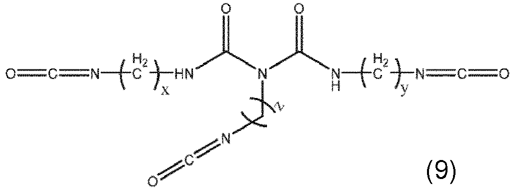 dans lequel x, y et z sont identiques ou différents et ont une valeur de 2-10, de préférence une valeur de 4-6, et de manière plus préférée, x, y et z sont 6 ;
des polyisocyanates à base de diisocyanate de toluène ; des polyisocyanates à base de diisocyanate de diphénylméthane ; des polyisocyanates à base de diisocyanate d'isophorone ; des prépolymères à base de diisocyanate de toluène ; des prépolymères à base de diisocyanate de diphénylméthane ; des prépolymères à base de diisocyanate d'isophorone, des prépolymères à base de diisocyanate d'hexaméthylène et leurs mélanges ; et
dans lequel lesdits nanocristaux sont incorporés dans ladite matrice polymère.

2. Composite nanocristallin selon la revendication 1, dans lequel ledit noyau comprenant un métal ou un composé semi-conducteur ou un mélange de ceux-ci est composé d'éléments sélectionnés dans la combinaison d'un ou plusieurs groupes différents du tableau périodique.

3. Composite nanocristallin selon la revendication 1 ou 2, dans lequel ledit noyau comprend un noyau et au moins une enveloppe monocouche ou multicouche ou dans lequel ledit noyau comprend un noyau et au moins deux enveloppes monocouches et/ou multicouches.

4. Composite nanocristallin selon l'une quelconque des revendications 1 à 3, dans lequel ledit métal ou composé semi-conducteur est une combinaison d'un ou de plusieurs éléments sélectionnés dans le groupe IV ; d'un ou de plusieurs éléments sélectionnés dans les groupes II et VI ; d'un ou de plusieurs éléments sélectionnés dans les groupes III et V ; d'un ou de plusieurs éléments sélectionnés dans les groupes IV et VI ; d'un ou de plusieurs éléments sélectionnés dans les groupes I et III et VI ou une combinaison de ceux-ci, de préférence, ledit métal ou composé semi-conducteur est sélectionné dans le groupe constitué par Si, Ge, SiC et SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ et AgGaSe₂.

5. Composite nanocristallin selon l'une quelconque des revendications 1 à 4, dans lequel ledit polythiol a une fonctionnalité de 2 à 6, de préférence de 2 à 4.

6. Composite nanocristallin selon l'une quelconque des revendications 1 à 5, dans lequel ledit polythiol est sélectionné dans le groupe constitué par le di(3-mercaptopropionate) de glycol, le tétrakis(3-mercaptobutylate) de pentaérythritol. la 1,3,5-tris(3-mercaptobutyloxyéthyl)-1,3,5-triazine-2,4,6(1H,3H,5H)-trione, le 1,4-bis(3-mercaptobutylyloxy) butane, le tris[2-(3-mercaptopropionyloxy)éthyl]isocyanurate, le tétrakis(3-mercaptopropionate) de pentaérythritol, le tris(3-mercaptopropionate) de triméthylolpropane, le tris(3-mercaptobutyrate) de triméthylolpropane, le tri-3-mercaptopropionate de triméthylolpropane éthoxylé, l'hexakis(3-mercaptopropionate) de dipentaérythritol et leurs mélanges.

7. Composite nanocristallin selon l'une quelconque des revendications 1 à 6, dans lequel ledit polyisocyanate a une fonctionnalité de 2 à 4, de préférence de 2 à 3.

8. Composite nanocristallin selon l'une quelconque des revendications 1 à 7, dans lequel ledit polyisocyanate est sélectionné dans le groupe constitué par le diisocyanate de 2,2'-diphénylméthane, le diisocyanate de 2,4'-diphénylméthane ; le diisocyanate de 4,4'-diphénylméthane, le 4,4'-diisocyanatodicyclohexylmethane, le diisocyanate de 1,6'-hexaméthylène, le 2,4'-diisocyanate de toluène, le 2,6'-diisocyanate de toluène et leurs mélanges.

9. Composite nanocristallin selon l'une quelconque des revendications 1 à 8, comprenant lesdits nanocristaux à de 0,1 % à 5 % en poids du poids total du composite.

10. Composite nanocristallin selon l'une quelconque des revendications 1 à 9, comprenant la matrice polymère à de 90 % à 99,99 % en poids du poids total du composite, de préférence de 92,5 % à 99,95 %, de manière plus préférée, de 95 % à 99,9 %.

11. Composite nanocristallin selon l'une quelconque des revendications 1 à 10, dans lequel ladite matrice de polythiouréthane est formée par addition nucléophile induite par UV, ladite matrice comprend en outre un photo-initiateur à de 0,01 % à 5 % en poids du poids total de la matrice de polythiouréthane, de préférence de 0,01 % à 3 % et, de manière plus préférée, de 0,01 % à 2 %.

12. Composite nanocristallin selon l'une quelconque des revendications 1 à 11, dans lequel ladite matrice de polythiouréthane est formée par durcissement induit par la chaleur, ladite matrice comprend en outre un initiateur thermique à de 0,01 % à 5 % en poids du poids total de la matrice de polythiouréthane, de préférence de 0,01 % à 3 % et, de manière plus préférée, de 0,01 % à 2 %.

13. Composite nanocristallin durci selon l'une quelconque des revendications 1 à 12.

14. Produit comprenant un composite nanocristallin selon l'une quelconque des revendications 1 à 12, dans lequel ledit produit est sélectionné dans le groupe constitué par un dispositif d'affichage, un dispositif électroluminescent, une cellule photovoltaïque, un photodétecteur, un dispositif convertisseur d'énergie, un laser, un capteur, un dispositif thermoélectrique, une encre de sécurité, un dispositif d'éclairage et dans des applications catalytiques ou biomédicales.

15. Utilisation d'un composite nanocristallin selon l'une quelconque des revendications 1 à 12 en tant qu'une source de photoluminescence ou d'électroluminescence.
